# FASCICULE DE BREVET EUROPEEN

(11) **EP 2 849 584 B1**
(45) Date de publication et mention de la délivrance du brevet: **16.10.2019**
(21) Numéro de dépôt: 13723858.0
(22) Date de dépôt: 23.04.2013
(51) Int. Cl.: A23N 12/08, A23N 12/10

(54) **INSTALLATION POUR LE TRAITEMENT THERMIQUE, NOTAMMENT LA TORRÉFACTION DE PRODUITS ALIMENTAIRES**
VORRICHTUNG ZUR THERMISCHEN BEHANDLUNG, INSBESONDERE RÖSTUNG, VON LEBENSMITTELN
INSTALLATION FOR THE TERMAL TREATMENT, AND IN PARTICULAR THE ROASTING, OF FOOD PRODUCTS

(30) Priorité: 16.05.2012 FR 1254502
(43) Date de publication de la demande: 25.03.2015
(73) Titulaire: FCD, 46230 Laburgade (FR)
(72) Inventeur: CHEINET, Florent, 46230 Laburgade (FR)
(74) Mandataire: Novagraaf Technologies
(86) Numéro de dépôt international: PCT/FR2013/050901
(87) Numéro de publication internationale: WO 2013/171389

(56) Documents cités:
- FR-A- 1 558 215
- FR-A3- 2 608 380
- US-A- 2 069 192
- US-A- 2 099 634
- US-A- 3 703 861
- US-A- 4 389 427

## Description

### Domaine technique

La présente invention concerne une installation pour le traitement thermique, notamment la torréfaction de produits alimentaires, comprenant une cuve de réception du produit associée à des moyens de brassage et à une source de chaleur.

### Etat de la technique

Des installations connues de ce type sont destinées par exemple à torréfier le cacao, le café, les pistaches, les noix de cajou, macadamia, arachides, mais également des produits en poudre.

A titre d'exemple, pour la torréfaction des fèves de cacao, il existe deux principales technologies : celle utilisant un tambour que l'on fait tourner autour d'un axe sensiblement horizontal et sous lequel on rapporte une source de chaleur externe ; et celle mettant en oeuvre une cuve verticale dans laquelle sont disposées des parois ajourées dirigées vers le bas selon un angle, et étagées pour former une série d'entonnoirs dirigeant le produit à torréfier vers la partie basse de la cuve, tout en le retenant légèrement et tout en le chauffant simultanément.

Ces systèmes présentent l'inconvénient de ne pas pouvoir traiter tous les produits et de constituer de gros consommateurs d'énergie.

Ceci est dû au fait que les paramètres fondamentaux dans la torréfaction sont :
- la température du produit,
- le mode de déplacement du produit dans le torréfacteur,
- la température des pièces en contact avec le produit,
- le temps de passage du produit dans le torréfacteur.

D'autres installations sont décrites notamment dans les documents US 2 099 634 et FR 1 558 215, mais celles-ci torréfient le produit en le faisant descendre de plateau en plateau, par gravité, mais toujours en couches minces. Ceci est un véritable inconvénient pour la maîtrise des arômes et empêche de travailler en pyrolyse de part le mode de chauffage utilisé, qui ne permet pas d'obtenir des températures très élevées.

### Description de l'invention

Pour remédier à cela, selon l'invention, le produit à traiter est introduit dans la cuve en continu par le haut, autrement dit, celle-ci fonctionne donc en charge permanente, c'est-à-dire pleine.

De plus, une température très élevée est obtenue à partir de plusieurs sources calorifiques.

Plus précisément, l'invention concerne une installation pour le traitement thermique, notamment la torréfaction de produits alimentaires, comprenant une cuve de réception du produit associée à des moyens de brassage et à une source de chaleur, caractérisée en ce que la cuve est constituée par deux cylindres verticaux coaxiaux et creux, l'un interne définissant une première paroi, l'autre externe définissant une seconde paroi d'un espace de section en forme de couronne dans lequel le produit à traiter est introduit par le haut en continu pour un fonctionnement en charge permanent, ou en discontinu, au moins l'une des deux parois en contact avec le produit étant chauffée par conductivité par l'intermédiaire de résistances électriques ou d'un fluide thermique, un gaz chaud étant également injecté dans le cylindre creux interne, de manière à homogénéiser la chaleur autour du produit contenu dans le premier espace en couronne défini par lesdites première et seconde parois de la cuve entre lesquelles sont intégrés les moyens de brassage.

Les avantages d'une telle invention sont les suivants :
- peu d'usure : les produits frottent les uns sur les autres,
- faible consommation d'énergie car meilleur brassage et plus grande surface d'échange,
- système continu qui permet de traiter les produits sous forme naturelle ou alcalinisée.

Les autres avantages d'une unité de torréfaction selon l'invention résident dans le prix de réalisation faible. Les pièces d'usure sont réduites. L'air a un flux montant et stérilise les produits durant le process.

Un autre avantage est la garantie de l'homogénéité du traitement, car le brassage réalisé par les pales est la garantie que toutes les particules de produits passent contre les parois chauffées.

En fait, le système selon l'invention permet de traiter thermiquement des solides divisés, c'est-à-dire permettant de traiter les particules de deux microns à plusieurs centimètres. Il permet de faire réagir des solides divisés avec un gaz. C'est un avantage majeur qui est le garant d'une très grande polyvalence, très recherchée par les utilisateurs qui traitent plusieurs produits, de différentes tailles, densités...

La grande simplicité du système procure également l'avantage de rendre son entretien facile et rapide.

Bien entendu, la taille de l'installation est à ajuster en fonction de la capacité demandée.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :

### Brève description des figures

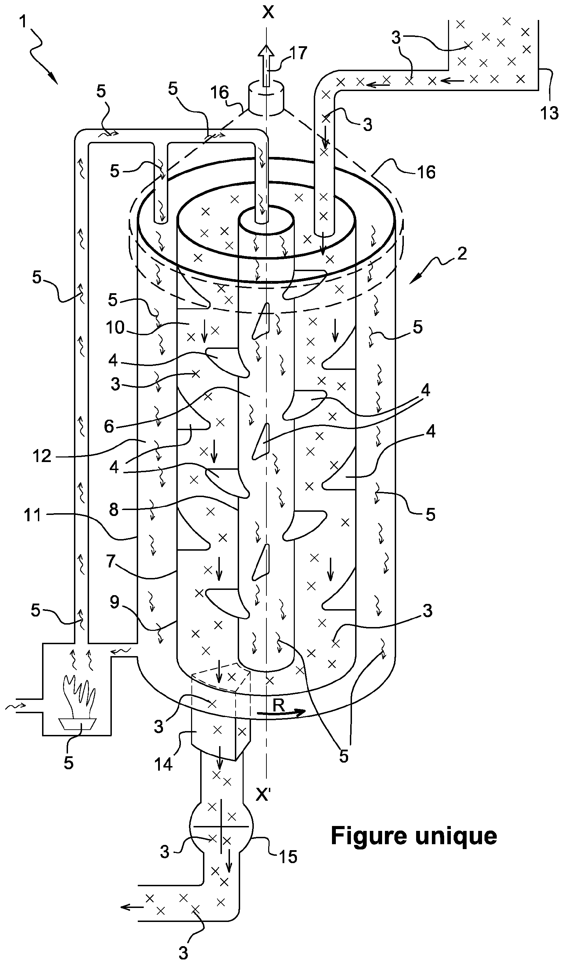

- La figure unique est une vue en perspective transparente du torréfacteur selon un exemple de réalisation de l'invention.

### Description détaillée

L'installation de traitement thermique 1 désignée dans son ensemble sur la figure unique, à titre d'exemple un torréfacteur, comprend une cuve de réception 2 d'un produit à traiter 3, associée à des moyens de brassage 4 et à une source de chaleur 5.

Selon l'invention, la cuve 2 est constituée par deux cylindres verticaux 6,7 coaxiaux et creux, l'un interne 6 définissant une première paroi 8, l'autre externe 7 définissant une seconde paroi 9 d'un espace 10 de section en forme de couronne dans lequel le produit à traiter 3 est introduit par le haut en continu pour un fonctionnement en charge permanent, ou en discontinu, au moins l'une des deux parois 8,9 en contact avec le produit 3 étant chauffée 5 par conductivité par l'intermédiaire de résistances électriques ou d'un fluide thermique, un gaz chaud 5 étant également injecté dans le cylindre creux interne 6, de manière à homogénéiser la chaleur 5 autour du produit 3 contenu dans le premier espace en couronne 10 défini par lesdites première et seconde parois 8,9 de la cuve 2, entre lesquelles sont intégrés les moyens de brassage 4.

Préférentiellement et selon le présent exemple représenté sur la figure unique, le cylindre externe 7 est lui-même doublé d'une paroi 11, constituant une troisième paroi de la cuve 2, formant avec la seconde paroi 9 un second espace 12 vertical creux, concentrique au premier, de section en forme de couronne. Le chauffage des parois peut être fait par des résistances électriques collées en surface intérieure, par un fluide thermique en circulation contre l'intérieur de la paroi, ou un gaz chauffé 5 en circulation contre le coté opposé au produit des parois des cylindres. Le cylindre est chauffé par conductivité et transmet ainsi sa chaleur au produit.

Selon une autre caractéristique de l'invention, le gaz chaud 5 est injecté dans le second espace en couronne 12 du cylindre creux externe 7 et dans le cylindre creux interne 6, à partir d'une source externe 5 et selon un circuit fermé injectant le gaz chaud qu'elle génère, dans les parties hautes desdits cylindres 7,6, pour le récupérer refroidi à leurs parties basses et le recycler.

Le mode de chauffage pourra être de l'électricité, un fluide thermique caloporteur, de l'air chaud, de la vapeur ou tout autre moyen.

La mise en oeuvre des moyens de brassage 4 est assurée par l'entrainement en rotation « R » d'au moins l'un des cylindres 6,7 comportant lesdits moyens.

Par ailleurs, les moyens de brassage 4 peuvent être constitués par une hélice continue ou par des pales alternées disposées en hélice, réalisées sur la première paroi 8 du cylindre interne 6 et/ou sur la seconde paroi 9 du cylindre externe 7, en contact avec le produit à traiter 3, l'entrainement en rotation « R » du/des cylindres correspondants 6,7 s'effectuant autour de leur axe XX', dans un même sens ou dans des sens contraires.

Selon une variante de réalisation, les moyens de brassage 4 sont constitués par un agitateur rotatif (non représenté), placé au coeur du produit 3 entre les deux cylindres 6,7, ceux-ci étant fixes.

Egalement, la cuve 2 est alimentée en continu en produits à traiter 3 par la partie haute de l'espace 10 délimité par la première paroi 8 du cylindre interne 6 et la seconde paroi 9 du cylindre externe 7, par l'intermédiaire d'un régulateur de débit d'alimentation 13, ledit espace 10 comportant à sa partie basse une trappe de sortie 14 du produit 3 associée à un régulateur de débit d'évacuation 15, les vitesses relatives de régulation d'alimentation et d'évacuation du produit 3 étant telles à lui permettre une descente par gravité au cours de laquelle il chauffe progressivement et transforme son humidité en vapeur. Celle-ci crée un flux ascendant ayant pour effet la stérilisation du produit 3, tout en contribuant à son chauffage.

La cuve 2 est coiffée, à sa partie supérieure, par une hotte d'extraction 16 associée à un régulateur de débit d'air 17.

## Revendications

1. Installation (1) pour le traitement thermique, notamment la torréfaction de produits alimentaires, comprenant une cuve de réception (2) du produit (3) associée à des moyens de brassage (4) et à une source de chaleur (5), **caractérisée en ce que** la cuve (2) est constituée par deux cylindres verticaux (6,7) coaxiaux et creux, l'un interne (6) définissant une première paroi (8), l'autre externe (7) définissant une seconde paroi (9) d'un espace (10) de section en forme de couronne continue dans lequel le produit à traiter (3) est introduit par le haut en continu pour un fonctionnement en charge permanent, ou en discontinu, au moins l'une des deux parois (8,9) en contact avec le produit (3) étant chauffée (5) par conductivité par l'intermédiaire de résistances électriques ou d'un fluide thermique, un gaz chaud (5) étant également injecté dans le cylindre creux interne (6), de manière à homogénéiser la chaleur (5) autour du produit (3) contenu dans le premier espace en couronne (10) défini par lesdites première et seconde parois (8,9) de la cuve (2) entre lesquelles sont intégrés les moyens de brassage (4).

2. Installation selon la revendication 1, **caractérisée en ce que** le cylindre externe (7) est lui-même doublé d'une paroi (11), constituant une troisième paroi de la cuve (2), formant avec la seconde paroi (9) un second espace (12) vertical creux, concentrique au premier, de section en forme de couronne, dans lequel est injecté un gaz chaud (5).

3. Installation selon les revendications 1 et 2, **caractérisée en ce que** le gaz chaud (5) est injecté dans le second espace en couronne (12) du cylindre creux externe (7) et dans le cylindre creux interne (6), à partir d'une source externe (5) et selon un circuit fermé injectant le gaz chaud qu'elle génère, dans les parties hautes desdits cylindres (7,6), pour le récupérer refroidi à leurs parties basses et le recycler.

4. Installation selon l'une des revendications 1 à 3, **caractérisée en ce que** la mise en oeuvre des moyens de brassage (4) est assurée par l'entrainement en rotation (R) d'au moins l'un des cylindres (6,7) comportant lesdits moyens.

5. Installation selon la revendication 4, **caractérisée en ce que** les moyens de brassage (4) sont constitués par une hélice continue ou par des pales alternées disposées en hélice, réalisées sur la première paroi (8) du cylindre interne (6) et/ou sur la seconde paroi (9) du cylindre externe (7), en contact avec le produit à traiter (3), l'entrainement en rotation (R) du/des cylindres correspondants (6,7) s'effectuant autour de leur axe XX', dans un même sens ou dans des sens contraires.

6. Installation selon l'une des revendications 1 à 3, **caractérisée en ce que** les moyens de brassage (4) sont constitués par un agitateur rotatif (non représenté), placé au coeur du produit (3) entre les deux cylindres (6,7), ceux-ci étant fixes.

7. Installation selon l'une des revendications 1 à 5, **caractérisée en ce que** la cuve (2) est alimentée en continu en produits à traiter (3) par la partie haute de l'espace (10) délimité par la première paroi (8) du cylindre interne (6) et la seconde paroi (9) du cylindre externe (7), par l'intermédiaire d'un régulateur de débit d'alimentation (13), ledit espace (10) comportant à sa partie basse une trappe de sortie (14) du produit (3) associée à un régulateur de débit d'évacuation (15), les vitesses relatives de régulation d'alimentation et d'évacuation du produit (3) étant telles à lui permettre une descente par gravité au cours de laquelle il chauffe progressivement et transforme son humidité en vapeur, celle-ci créant un flux ascendant ayant pour effet la stérilisation du produit (3), tout en contribuant à son chauffage.

8. Installation selon l'une des revendications 1 à 7, **caractérisée en ce que** la cuve (2) est coiffée, à sa partie supérieure, par une hotte d'extraction (16) associée à un régulateur de débit d'air (17).

## Patentansprüche

1. Vorrichtung (1) zur thermischen Behandlung, insbesondere Röstung von Lebensmitteln, umfassend einen Aufnahmebehälter (2) des Produkts (3), der Rührmitteln (4) und einer Wärmequelle (5) zugeordnet ist, **dadurch gekennzeichnet, dass** der Behälter (2) aus zwei vertikalen Zylindern (6, 7) besteht, die koaxial und hohl sind, wobei der Innere (6) eine erste Wand (8) definiert, wobei der Äußere (7) eine zweite Wand (9) eines Raumes (10) mit einem Querschnitt in der Form eines kontinuierlichen Kranzes definiert, in dem das zu behandelnde Produkt (3) von oben kontinuierlich für einen Betrieb mit permanenter Beladung eingeleitet wird, oder nicht kontinuierlich, wobei mindestens eine der zwei Wände (8, 9), die mit dem Produkt (3) in Kontakt ist, durch Konduktivität mittels elektrischer Widerstände oder eines thermischen Fluids erhitzt (5) wird, wobei ein heißes Gas (5) ebenfalls in den inneren hohlen Zylinder (6) eingespritzt wird, um die Hitze (5) rund um das Produkt (3) zu homogenisieren, das in dem ersten kranzförmigen Raum (10) enthalten ist, der von der ersten und zweiten Wand (8, 9) des Behälters (2) definiert wird, zwischen denen die Rührmittel (4) eingebaut sind.

2. Vorrichtung nach Anspruch 1, **dadurch gekennzeichnet, dass** der äußere Zylinder (7) selbst von einer Wand (11) aufgedoppelt ist, die eine dritte Wand des Behälters (2) bildet, die mit der zweiten Wand (9) einen hohlen, vertikalen zweiten Raum (12) bildet, konzentrisch zu dem ersten, mit einem Querschnitt in der Form eines Kranzes, in dem ein heißes Gas (5) eingespritzt wird.

3. Vorrichtung nach Anspruch 1 und 2, **dadurch gekennzeichnet, dass** das heiße Gas (5) in den kranzförmigen zweiten Raum (12) des äußeren hohlen Zylinders (7) und in den inneren hohlen Zylinder (6) eingespritzt wird, ausgehend von einer äußeren Quelle (5) und gemäß einem geschlossenen Kreis, der das heiße Gas, das sie erzeugt, in die oberen Teile der Zylinder (7, 6) einspritzt, um es abgekühlt an deren unteren Teilen wiederzugewinnen und es wiederzuverwerten.

4. Vorrichtung nach einem der Ansprüche 1 bis 3, **dadurch gekennzeichnet, dass** die Umsetzung der Rührmittel (4) sichergestellt wird durch den Drehantrieb (R) von mindestens einem der Zylinder (6, 7), der die Mittel aufweist.

5. Vorrichtung nach Anspruch 4, **dadurch gekennzeichnet, dass** die Rührmittel (4) von einer Endlosschraube oder von abwechselnden Schaufeln, die schraubenförmig angeordnet sind, gebildet werden, die auf der ersten Wand (8) des inneren Zylinders (6) und/oder auf der zweiten Wand (9) des äußeren Zylinders (7) ausgeführt sind, in Kontakt mit dem zu behandelnden Produkt (3), wobei der Drehantrieb (R) des/der entsprechenden Zylinder (6, 7) um ihre Achse XX' erfolgt, in eine gleiche Richtung oder in entgegengesetzte Richtungen.

6. Vorrichtung nach einem der Ansprüche 1 bis 3, **dadurch gekennzeichnet, dass** die Rührmittel (4) von einem drehbaren Rührwerk (nicht dargestellt) gebildet werden, das in der Mitte des Produkts (3) zwischen den zwei Zylindern (6, 7) platziert ist, wobei diese festsitzend sind.

7. Vorrichtung nach einem der Ansprüche 1 bis 5, **dadurch gekennzeichnet, dass** der Behälter (2) über den oberen Teil des Raumes (10), der von der ersten Wand (8) des inneren Zylinders (6) und der zweiten Wand (9) des äußeren Zylinders (7) begrenzt wird, kontinuierlich mit zu behandelnden Produkten (3) gespeist wird, mittels eines Zuleitungsstromreglers (13), wobei der Raum (10) an seinem unteren Teil eine Austrittsklappe (14) des Produkts (3) aufweist, die einem Ableitungsstromregler (15) zugeordnet ist, wobei die relativen Geschwindigkeiten der Zuleitungs- und Ableitungsregelung des Produkts (3) derart sind, dass ihm ein Absinken durch Schwerkraft ermöglicht wird, währenddessen es sich allmählich erhitzt und seine Feuchtigkeit in Dampf umwandelt, wobei dieser einen aufsteigenden Fluss erzeugt, der die Sterilisation des Produkts (3) zur Folge hat, wobei gleichzeitig zu seiner Erhitzung beigetragen wird.

8. Vorrichtung nach einem der Ansprüche 1 bis 7, **dadurch gekennzeichnet, dass** der Behälter (2) an seinem oberen Teil von einer Abzugshaube (16) bedeckt wird, die einem Luftstromregler (17) zugeordnet ist.

## Claims

1. Heat-treating equipment (1), in particular for roasting food products, comprising a vessel (2) for receiving the product (3), which is associated with stirring means (4) and a heat source (5), **characterised in that** the vessel (2) is constituted by two vertical, coaxial and hollow drums (6, 7), including an inner drum (6) defining a first wall (8), and an outer drum (7) defining a second wall (9) of a space (10) having a continuous ring-shaped section, into which the product (3) to be treated is introduced continuously from above for a loading operation that is continuous or discontinuous, at least one of the two walls (8, 9) in contact with the product (3) being heated (5) by conductivity via electric resistors or a heat transfer fluid, a hot gas (5) also being injected into the inner hollow drum (6), so as to make the heat (5) consistent around the product (3) contained within the first ring-shaped space (10) defined by said first and second walls (8, 9) of the vessel (2), between which the stirring means (4) are integrated.

2. Equipment according to claim 1, **characterised in that** the outer drum (7) is itself lined by a wall (11), constituting a third wall of the vessel (2), forming with the second wall (9) a second hollow vertical space (12) that is concentric to the first, having a ring-shaped section, into which a hot gas (5) is injected.

3. Equipment according to claims 1 and 2, **characterised in that** the hot gas (5) is injected into the second ring-shaped space (12) of the outer hollow drum (7) and into the inner hollow drum (6), from an outer source (5) and according to a closed circuit injecting the hot gas that it generates, into the top parts of said drums (7, 6), in order to collect and recycle same once cooled from the bottom parts thereof.

4. Equipment according to one of claims 1 to 3, **characterised in that** the stirring means (4) are implemented by the rotation (R) of at least one of the drums (6, 7) including said means.

5. Equipment according to claim 4, **characterised in that** the stirring means (4) are constituted by a continuous helix or by alternating blades arranged in a helix, produced on the first wall (8) of the inner drum (6) and/or on the second wall (9) of the outer drum (7), in contact with the product to be treated (3), the rotation (R) of the one or more corresponding drums (6, 7) taking place about the axis XX' thereof, in the same direction or in opposite directions.

6. Equipment according to one of claims 1 to 3, **characterised in that** the stirring means (4) are constituted by a rotary stirrer (not shown), placed in the centre of the product (3) between the two drums (6, 7), the latter being fixed.

7. Equipment according to one of claims 1 to 5, **characterised in that** the vessel (2) is continuously supplied with products to be treated (3) by the top part of the space (10) delimited by the first wall (8) of the inner drum (6) and the second wall (9) of the outer drum (7), via an intake flow controller (13), said space (10) including, at the bottom part thereof, an outlet hatch (14) for the product (3) associated with an output flow controller (15), the relative controlled intake and output speeds for the product (3) being such that they allow the gravitational descent thereof, during which it is gradually heated and the humidity thereof is transformed into vapour, creating an ascending flux resulting in the sterilisation of the product (3), while contributing to the heating thereof.

8. Equipment according to one of claims 1 to 7, **characterised in that** the vessel (2) is covered, at the top part thereof, by a vent hood (16) associated with an air flow controller (17).
